# EUROPÄISCHE PATENTANMELDUNG

(11) **EP 4 610 434 A1**
(43) Veröffentlichungstag der Anmeldung: **03.09.2025**
(21) Anmeldenummer: 25160242.1
(22) Anmeldetag: 26.02.2025
(51) Int. Cl.: E02D 3/046, E02D 3/026, E01C 19/30, H02J 7/00

(54) **BODENVERDICHTUNGSVORRICHTUNG MIT EINRICHTUNG ZUR ERHÖHUNG DER AKKULAUFZEIT UND AKKULEBENSDAUER**

(30) Priorität: 27.02.2024 DE 102024105417
(71) Anmelder: Wacker Neuson Produktion GmbH & Co. KG, 85084 Reichertshofen (DE)
(72) Erfinder: GLANZ, Christian, 85221 Dachau (DE); KÄSER, Martin, 85778 Haimhausen (DE); BACHMANN, Matthias, 86633 Neuburg (DE)
(74) Vertreter: Müller Hoffmann & Partner

(57) **Zusammenfassung**

Es wird eine Bodenverdichtungsvorrichtung angegeben, mit einer Arbeitsvorrichtung (1) zum Erzeugen einer Arbeitsbewegung zur Bodenverdichtung; mit einem Elektroantrieb (2) zum Antreiben der Arbeitsvorrichtung (1); mit einem elektrischen Energiespeicher (3) zum Bereitstellen von elektrischer Energie für den Elektroantrieb (2); und mit einer Umformereinrichtung (4) zum Umformen einer von dem Energiespeicher (3) beziehbaren Gleichspannung in eine Wechselspannung für den Elektroantrieb (2). Die Umformereinrichtung (4) ist ausgebildet, um die Wechselspannung mit einer vorbestimmten Regel-Frequenz bereitzustellen, wenn die von dem Energiespeicher (3) bezogene Gleichspannung mit einem Gleichspannungswert oberhalb von einem vorgegebenen Schwellspannungswert anliegt; und um die Wechselspannung mit einer reduzierten Frequenz bereitzustellen, die niedriger ist als die Regel-Frequenz, wenn die von dem Energiespeicher (3) bezogene Gleichspannung mit einem Gleichspannungswert gleich oder unterhalb von dem Schwellspannungswert anliegt.

## Beschreibung

Die Erfindung betrifft eine mit einem Akku betriebene Bodenverdichtungsvorrichtung.

Bodenverdichtungsvorrichtungen, insbesondere Stampfer oder Rüttelplatten bzw. Vibrationsplatten, sind bekannt. Sie weisen einen Antrieb auf, der mit Hilfe einer Arbeitsvorrichtung eine Arbeitsbewegung, insbesondere eine Stampfbewegung oder eine Rüttelbewegung, erzeugt, die mit Hilfe eines Stampffußes oder einer Bodenkontaktplatte auf den zu verdichtenden Boden übertragen wird.

Zunehmend werden Bodenverdichtungsvorrichtungen bekannt, die von einem Elektroantrieb angetrieben werden, der seine Energie aus einem elektrischen Energiespeicher (Akku) bezieht. Bei derartigen akkubetriebenen Geräten weist der Elektroantrieb einen Elektromotor auf, z.B. eine Synchronmaschine, die mit einer Wechselspannung mit einer bestimmten Frequenz, z.B. 150 Hz, versorgt werden muss. Der Akku stellt allerdings lediglich eine Gleichspannung zur Verfügung. Zur Umwandlung der vom Akku bereitgestellten Gleichspannung in die Wechselspannung für dem Elektroantrieb ist ein Umformer vorgesehen.

Die Kapazität des Akkus ist naturgemäß begrenzt. Wenn der Akku im Laufe des Betriebs entladen wird, reduziert sich sein Ladezustand (SOC - State of Charge). Bei einem geringen Ladezustand wird aufgrund der Zellchemie im Akku die Akkuspannung und damit die am Umformer anliegende Spannung ebenfalls reduziert. Aufgrund der durch den Umformer fest vorgegebenen Frequenz wird jedoch eine konstante Leistung vom Elektromotor angefordert. Um die Leistung konstant zu halten, müssen bei sinkender Akkuspannung die Motorströme erhöht werden, aufgrund des physikalischen Zusammenhangs Leistung = Spannung x Strom. Durch die geringere Spannung kann sich zudem der Schlupf im Motor erhöhen, was zu einer thermischen Verschlechterung (Erwärmung) führt und einen höheren Kühlbedarf nach sich zieht.

Das Absinken der bereitgestellten Akkuspannung (Gleichspannung) im Betrieb und die damit erforderlichen höheren Ströme führen zu einer Verminderung der Akkulaufzeit und der Akkulebensdauer, einem höheren Kühlbedarf der Akkuzellen und einer reduzierten Laufzeit des Elektroantriebs.

Der Erfindung liegt daher die Aufgabe zugrunde, eine Bodenverdichtungsvorrichtung anzubieten, bei der die genannten Probleme, insbesondere das Vermindern der Akkulaufzeit nicht oder nur abgemildert auftreten können.

Die Aufgabe wird durch eine Bodenverdichtungsvorrichtung mit den Merkmalen von Anspruch gelöst 1. Vorteilhafte Ausgestaltungen sind in den abhängigen Ansprüchen angegeben.

Es wird eine Bodenverdichtungsvorrichtung angegeben, mit einer Arbeitsvorrichtung zum Erzeugen einer Arbeitsbewegung zur Bodenverdichtung; einem Elektroantrieb zum Antreiben der Arbeitsvorrichtung; einem elektrischen Energiespeicher zum Bereitstellen von elektrischer Energie für den Elektroantrieb; und mit einer Umformereinrichtung zum Umformen einer von dem Energiespeicher beziehbaren Gleichspannung in eine Wechselspannung für den Elektroantrieb; wobei die Umformereinrichtung ausgebildet ist, um die Wechselspannung mit einer vorbestimmten Regel-Frequenz bereitzustellen, wenn die von dem Energiespeicher bezogene Gleichspannung mit einem Gleichspannungswert oberhalb von einem vorgegebenen Schwellspannungswert anliegt, und um die Wechselspannung mit einer reduzierten Frequenz bereitzustellen, die niedriger ist als die Regel-Frequenz, wenn die von dem Energiespeicher bezogene Gleichspannung mit einem Gleichspannungswert gleich oder unterhalb von dem Schwellspannungswert anliegt.

Die Arbeitsvorrichtung dient zum Erzeugen der für die Betonverdichtung nutzbaren Arbeitsbewegung, z.B. einer Stampfbewegung oder einer Rüttelbewegung. Der Elektroantrieb dient dabei zum Antreiben der Arbeitsvorrichtung und weist insbesondere einen Elektromotor auf.

Der Elektronantrieb bezieht die elektrische Energie von dem elektrischen Energiespeicher, insbesondere einem Akku. Der Akku kann in die Bodenverdichtungsvorrichtung fest integriert sein. Alternativ kann er wechselbar vorgesehen sein, sodass er bei Entleerung schnell gegen einen frisch aufgeladenen Akku ausgetauscht werden kann.

Die Umformereinrichtung (Umformer) wandelt die vom elektrischen Energiespeicher (Akku) bezogene Gleichspannung in eine für den Elektromotor geeignete Wechselspannung. Die Wechselspannung weist dementsprechend eine Frequenz auf, die der Motorfrequenz entspricht und geeignet ist, um den Elektromotor mit der gewünschten Drehzahl anzutreiben. In der Praxis haben sich Frequenzwerte zwischen 100 und 300 Hz, z.B. 150 Hz als gut geeignet erwiesen. Da der Motor im Betrieb mit dieser Frequenz betrieben werden soll, wird sie nachfolgend auch als "Regel-Frequenz" bezeichnet. Der Umformer kann dabei auch die Ackusteuerung (Batteriemanagementsystem - BMS) umfassen oder Teil der Akkusteuerung sein. Ebenso ist es möglich, dass der Umformer fest in die Bodenverdichtungsvorrichtung integriert ist.

Das Batteriemanagementsystem BMS sollte immer mit dem Akku verbunden sein. Im Falle einer Wechselbarkeit des Akkus ist es zweckmäßig, dass auch das Batteriemanagementsystem BMS mit dem Akku wechselbar ist. In diesem Fall verbleibt der fest in die Bodenverdichtungsvorrichtung integrierte Umformer bei der Bodenverdichtungsvorrichtung, während der Akku mit seinem BMS auswechselbar entfernt werden kann.

Die vom Akku bezogene Spannung (Gleichspannung) und gegebenenfalls auch der vom Akku bezogene Strom können kontinuierlich gemessen werden. Hierfür können z.B. im Umformer geeignete Messeinrichtungen vorgesehen werden. Ebenso ist es möglich, dass das Messen der Spannung bzw. des Stroms durch das BMS erfolgt. Der dann vom BMS gemessene Spannungs- oder Stromwert kann in geeigneter Weise an den Umformer kommuniziert werden.

Aufgrund ihrer Gleichmäßigkeit und der guten Erfassbarkeit kann die Akkuspannung (Gleichspannung) als Signal verwendet werden, um die Frequenz entsprechend einzustellen. Solange die vom Akku bezogene Gleichspannung oberhalb von dem vorgegebenen Schwellspannungswert festgestellt wird, kann die Frequenz auf dem vorgegebenen Regel-Frequenzwert gehalten werden. Wenn jedoch ein Unterschreiten der vorgegebenen Schwellspannung festgestellt wird, wird die Frequenz der Wechselspannung und damit die Motorfrequenz ebenfalls abgesenkt, und zwar unter die Regel-Frequenz.

Der Schwellspannungswert kann in Abhängigkeit von der vom Akku maximal bereitstellbaren Gleichspannung gewählt werden. Wenn der Akku z.B. typischerweise eine Gleichspannung zwischen 40 und 60 V bereitstellen kann, kann der Schwellspannungswert z.B. auf 50 V oder 45 V eingestellt werden. Insbesondere kann der Schwellspannungswert unter Berücksichtigung der im Betrieb jeweils auftretenden Ströme eingestellt werden, um zu hohe Stromwerte und damit eine zu hohe Belastung des Akkus zu vermeiden.

Mit Hilfe des entsprechend ausgebildeten Umformers kann somit bei einem Absinken der Ackuspannung (Gleichspannung) ein Anstieg des Akkustroms verhindert werden, indem die dem Akku insgesamt entnommene Leistung durch ein Reduzieren der Frequenz vermindert wird. Dabei kann z.B. erreicht werden, dass der dem Akku entnommene Akkustrom im Wesentlichen konstant gehalten wird, bzw. nicht oder nur gering ansteigt.

Die Verminderung der Frequenz und damit der Motorfrequenz und der Motordrehzahl kann vom Bediener z.B. auch akustisch wahrgenommen werden. Auf diese Weise erhält der Bediener die Information, dass die Ladung des Akkus zur Neige geht und ein Austausch des Akkus bzw. ein Aufladen empfehlenswert sein könnte.

Die Umformereinrichtung kann dementsprechend ausgebildet sein, um bei einem Unterschreiten des Schwellspannungswerts durch die Gleichspannung die Frequenz der Wechselspannung entsprechend einer vorgegebenen Regel zu reduzieren. Die Regel kann z.B. eine lineare Reduzierung, eine stufenweise Reduzierung oder eine proportionale Reduzierung bewirken.

Die Umformereinrichtung kann ausgebildet sein, um bei einem Unterschreiten des Schwellspannungswerts durch die Gleichspannung die Frequenz der Wechselspannung jeweils stufenweise zu reduzieren. Wenn somit festgestellt wird, dass die Gleichspannung den Schwellspannungswert unterschritten hat, wird die Frequenz und damit auch die Motordrehzahl stufenweise reduziert. Bei Unterschreiten weiterer Spannungswerte kann die stufenweise Reduktion weiter vorgenommen werden.

Zum Beispiel kann die Schwellspannung auf einen Wert von 45 Volt definiert sein. Bei Unterschreiten des Schwellspannungswerts wird die Frequenz z.B. um 0,5 Hz je 0,5 V (Verminderung der Gleichspannung) stufenweise abgesenkt.

Es kann eine Spannungsmessvorrichtung vorgesehen sein, zum Messen der von dem Energiespeicher bezogenen Gleichspannung. Zudem kann auch eine Stromnetzvorrichtung vorgesehen sein, zum Messen des von dem Energiespeicher bezogenen Stroms.

Die von der Spannungsmessvorrichtung gemessene Gleichspannung kann als Signal nutzbar sein, zum Einstellen der Frequenz durch die Umformereinrichtung.

Die Umformereinrichtung und der Energiespeicher können in einer Baueinheit integriert sein. Somit können der Energiespeicher und die Umformereinrichtung gemeinsam als eine Einheit ausgetauscht sein. Dabei kann die Umformereinrichtung auch Bestandteil der Batteriesteuerung sein.

Die Umformereinrichtung kann eine Steuereinrichtung aufweisen, die gleichzeitig auch die Batteriesteuerung (Akkusteuerung) bzw. das Batteriemanagementsystem (BMS) umfasst. Dementsprechend kann die Akkusteuerung die Umformereinrichtung ansteuern, um die vorgesehene Reduktion der Frequenz bei Unterschreiten des Schwellspannungswerts zu bewirken.

Bei einer Variante kann die Bodenverdichtungsvorrichtung ein Stampfer sein, wobei die Arbeitsbewegung dann eine Stampfbewegung sein kann, ein Stampffuß zum Verdichten eines Bodens vorgesehen sein kann, und wobei die Arbeitsvorrichtung eine Stampfvorrichtung aufweisen kann, zum Erzeugen der Stampfbewegung des Stampffußes.

Bei einer anderen Variante kann die Bodenverdichtungsvorrichtung eine Rüttelplatte sein, wobei die Arbeitsbewegung eine Rüttelbewegung sein kann, eine Bodenkontaktplatte vorgesehen sein kann, die Arbeitsvorrichtung einen Unwuchterreger zum Erzeugen der Rüttelbewegung zum Erzeugen der Bodenverdichtung aufweisen kann, und wobei die Rüttelbewegung auf die Bodenkontaktplatte übertragen werden kann.

Mit Hilfe der Erfindung ist es somit möglich, den Anstieg des Motorstroms zu kompensieren, wenn die vom Akku bereitgestellte Spannung abfällt. Dementsprechend kann die Laufzeit des Akkus erhöht werden. Der Bediener wird durch die Verminderung der Frequenz darauf aufmerksam gemacht, dass der Ladezustand gering ist und eine Aufladung sinnvoll sein kann. Durch die Reduktion der Akkuströme entsteht ein geringerer Kühlbedarf. Zudem kann die Lebensdauer des Akkus verlängert werden.

Diese und weitere Vorteile und Merkmale werden nachfolgend anhand eines Beispiels unter Zuhilfenahme der begleitenden Figuren näher erläutert. Es zeigen:
Fig. 1 in stark schematisierter Darstellung den Aufbau einer Bodenverdichtungsvorrichtung; und
Fig. 2 den Verlauf einer Akkuspannung und einer Umformerfrequenz über der Zeit.

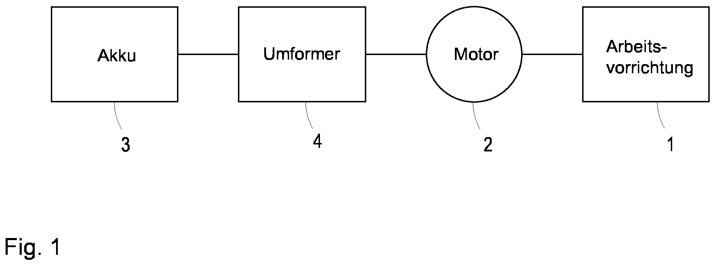

Fig. 1 zeigt in stark schematisierter Weise den Aufbau einer Bodenverdichtungsvorrichtung, z.B. eines Stampfers oder einer Rüttel- bzw. Vibrationsplatte.

Die Bodenverdichtungsvorrichtung weist eine Arbeitsvorrichtung 1 auf, mit der die gewünschte Arbeitsbewegung zur Bodenverdichtung erzeugt werden kann. Bei der Arbeitsvorrichtung 1 kann es sich dementsprechend um eine Stampfvorrichtung (für einen Stampfer) oder um einen Unwuchterreger (für eine Rüttelplatte) handeln. Der Aufbau einer Stampfvorrichtung oder eines Unwuchterregers ist vielfältig bekannt und muss daher an dieser Stelle nicht im Einzelnen erläutert werden.

Die Arbeitsvorrichtung 1 wird durch einen Elektromotor 2 angetrieben. Der Elektromotor 2 kann räumlich in die Arbeitsvorrichtung 1 integriert sein. Zum Beispiel kann der Elektromotor 2 Teil des als Arbeitsvorrichtung 1 dienenden Unwuchterregers sein. Alternativ ist es auch möglich, den Elektromotor 2 räumlich getrennt von der Arbeitsvorrichtung 1 anzuordnen. In diesem Fall müssen entsprechende Übertragungseinrichtungen, wie z.B. Kupplungen, Getriebe, Riemenantriebe, Wellentriebe, Hydraulikantriebe etc. vorgesehen werden, um die Motorleistung des Elektromotors 2 auf die Arbeitsvorrichtung 1 zu übertragen.

Der Elektromotor 2 erhält seine elektrische Energie von einem als elektrischer Energiespeicher dienenden Akku 3. Der Akku 3 kann in die Bodenverdichtungsvorrichtung fest integriert sein. Alternativ kann er wechselbar vorgesehen sein, sodass er bei Entleerung schnell gegen einen frisch aufgeladenen Akku 3 ausgetauscht werden kann.

Der Akku 3 stellt eine Gleichspannung zur Verfügung. Da der Elektromotor 2 z.B. eine Synchronmaschine sein kann, muss er durch eine Wechselspannung betrieben werden. Zum Umwandeln der Gleichspannung des Akkus 3 in die geeignete Wechselspannung für den Elektromotor 2 ist ein Umformer 4 vorgesehen.

Der Umformer 4 erzeugt eine Wechselspannung mit einer vorgegebenen Frequenz. Im normalen Betriebszustand, bei ausreichend aufgeladenem Akku 3, stellt der Umformer 4 die Wechselspannung mit einer vorbestimmten Regel-Frequenz zur Verfügung, z.B. 150 Hz. Auch andere Frequenzwerte können sinnvoll sein, je nach Ausgestaltung des Elektromotors 2 und des gewünschten Anwendungsfalls.

Im zunehmenden Betrieb wird der Akku 3 entladen, so dass er nicht mehr die im Vollladezustand vorhandene Gleichspannung, z.B. 40 - 60 V, bereitstellen kann. Vielmehr sinkt die Spannung des Akkus 3 mit zunehmender Betriebsdauer ab. Um dennoch die gewünschte Frequenz (Regel-Frequenz) für den Elektromotor 2 bereitstellen zu können, fordert der Elektromotor über den Umformer 4 einen höheren Strom vom Akku 3 an. Dies führt zu einer zunehmenden Belastung und Erwärmung des Akkus 3. Auch kann die Lebensdauer des Akkus 3 im Laufe der Zeit beeinträchtigt werden.

Um das unerwünschte Ansteigen des Akkustroms zu verhindern, ist der Umformer 4 bzw. eine mit dem Umformer in Verbindung stehende Steuereinrichtung des Akkus 3 (Batteriesteuerung) erfindungsgemäß dazu ausgebildet, die Frequenz der Wechselspannung und damit die Motorfrequenz des Elektromotors 2 zu reduzieren, wenn die Gleichspannung des Ackus 3 einen bestimmten Schwellspannungswert unterschreitet.

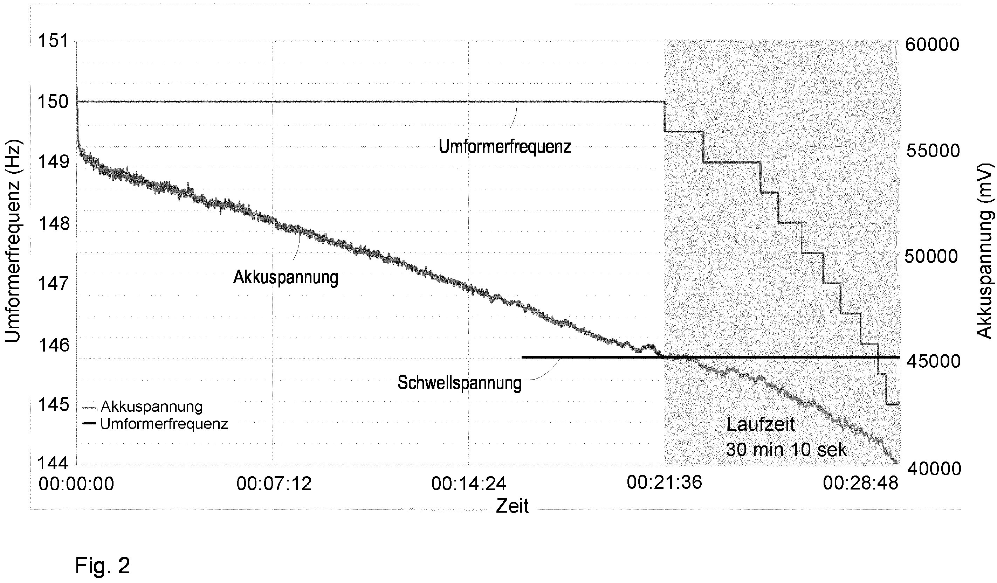

Fig. 2 erläutert diesen Zusammenhang näher. Dort ist der Verlauf der Akkuspannung und der Umformerfrequenz bzw. Motorfrequenz über die Zeit (Betriebszeit) aufgetragen. In dem gezeigten Beispiel wird eine Laufzeit von ca. 30 min betrachtet.

Bereits mit dem Start des Elektromotors 2 und damit der Bodenverdichtungsvorrichtung fällt die im Ruhezustand anliegende Spannung (ca. 57 V bzw. 57.000 mV) auf einen Wert unterhalb von 55 V ab. Die Motorfrequenz (und damit die Wechselspannungsfrequenz) wird von dem Umformer 4 auf einen Wert von 150 Hz eingestellt (Regel-Frequenz).

Im Laufe des Betriebs nimmt die Spannung weiter ab, wie durch den Abfall der Kurve "Ackuspannung" in Fig. 2 erkennbar.

Im gezeigten Beispiel fällt die Gleichspannung des Akkus 3 nach 21 Minuten und 36 Sekunden (00:21:36") unter einen Wert von 45 V. Dieser Wert ist als Schwellspannung definiert.

Der Umformer 4 interpretiert das Absinken der Spannung dahingehend, dass der Akku 3 schon zu einem erheblichen Teil entladen wurde. Im Gegenzug sind die vom Akku 3 durch den Elektromotor 2 und den Umformer 4 angeforderten Ströme zunehmend angestiegen, damit der Elektromotor 2 die gewünschte Leistung zum Antreiben der Arbeitsvorrichtung 1 konstant abgeben kann.

Mit Absinken der Akkuspannung unter die Schwellspannung (45 V) verändert der Umformer 4 jedoch die Frequenz. Im vorliegenden Beispiel wird die Frequenz von 150 Hz um 0,5 Hz je 0,5 V Spannungsabfall stufenartig abgesenkt. Wenn dementsprechend die Ackuspannung um 0,5 V sinkt, reduziert sich die Motorfrequenz um 0,5 Hz, wie in Fig. 2 durch das stufenweise Absinken der Frequenz gezeigt. So ergibt sich, dass bei einem Absinken der Akkuspannung von 45 auf 40 V die Umformerfrequenz von 150 Hz auf 145 Hz abgesenkt wird.

Im Gegenzug kann damit ein weiteres Ansteigen der Motorströme und damit der aus dem Akku 3 bezogenen Ströme verhindert oder zumindest reduziert werden. Eine entsprechende Schonung des Akkus ist die Folge. Zudem besteht ein geringerer Kühlbedarf für den Akku 3.

## Patentansprüche

1. Bodenverdichtungsvorrichtung, mit
- einer Arbeitsvorrichtung (1) zum Erzeugen einer Arbeitsbewegung zur Bodenverdichtung;
- einem Elektroantrieb (2) zum Antreiben der Arbeitsvorrichtung (1);
- einem elektrischen Energiespeicher (3) zum Bereitstellen von elektrischer Energie für den Elektroantrieb (2); und mit
- einer Umformereinrichtung (4) zum Umformen einer von dem Energiespeicher (3) beziehbaren Gleichspannung in eine Wechselspannung für den Elektroantrieb (2);
wobei
- die Umformereinrichtung (4) ausgebildet ist, um
+ die Wechselspannung mit einer vorbestimmten Regel-Frequenz bereitzustellen, wenn die von dem Energiespeicher (3) bezogene Gleichspannung mit einem Gleichspannungswert oberhalb von einem vorgegebenen Schwellspannungswert anliegt; und um
+ die Wechselspannung mit einer reduzierten Frequenz bereitzustellen, die niedriger ist als die Regel-Frequenz, wenn die von dem Energiespeicher (3) bezogene Gleichspannung mit einem Gleichspannungswert gleich oder unterhalb von dem Schwellspannungswert anliegt.

2. Bodenverdichtungsvorrichtung nach Anspruch 1, wobei die Umformereinrichtung (4) ausgebildet ist, um bei einem Unterschreiten des Schwellspannungswerts durch die Gleichspannung die Frequenz der Wechselspannung entsprechend einer vorgegebenen Regel zu reduzieren.

3. Bodenverdichtungsvorrichtung nach Anspruch 1 oder 2, wobei die Umformereinrichtung (4) ausgebildet ist, um bei einem Unterschreiten des Schwellspannungswerts durch die Gleichspannung die Frequenz der Wechselspannung jeweils stufenweise zu reduzieren.

4. Bodenverdichtungsvorrichtung nach einem der vorstehenden Ansprüche, wobei eine Spannungsmessvorrichtung vorgesehen ist, zum Messen der von dem Energiespeicher (3) bezogenen Gleichspannung.

5. Bodenverdichtungsvorrichtung nach einem der vorstehenden Ansprüche, wobei die von der Spannungsmessvorrichtung gemessene Gleichspannung als Signal nutzbar ist, zum Einstellen der Frequenz durch die Umformereinrichtung (4).

6. Bodenverdichtungsvorrichtung nach einem der vorstehenden Ansprüche, wobei die Umformereinrichtung (4) und der Energiespeicher (3) in einer Baueinheit integriert sind.

7. Bodenverdichtungsvorrichtung nach einem der vorstehenden Ansprüche, wobei
- die Bodenverdichtungsvorrichtung ein Stampfer ist;
- die Arbeitsbewegung eine Stampfbewegung ist;
- ein Stampffuß zum Verdichten eines Bodens vorgesehen ist;
- die Arbeitsvorrichtung (1) eine Stampfvorrichtung aufweist, zum Erzeugen der Stampfbewegung des Stampffußes.

8. Bodenverdichtungsvorrichtung nach einem der Ansprüche 1 bis 6, wobei
- die Bodenverdichtungsvorrichtung eine Rüttelplatte ist;
- die Arbeitsbewegung eine Rüttelbewegung ist;
- eine Bodenkontaktplatte vorgesehen ist;
- die Arbeitsvorrichtung (1) einen Unwuchterreger zum Erzeugen der Rüttelbewegung zur Bodenverdichtung aufweist;
- die Rüttelbewegung auf die Bodenkontaktplatte übertragen wird.
